# EUROPEAN PATENT APPLICATION

(11) **EP 4 592 807 A1**
(43) Date of publication of application: **30.07.2025**
(21) Application number: 23867985.6
(22) Date of filing: 29.08.2023
(51) Int. Cl.: G06F 3/0481, G06F 16/248

(54) **INFORMATION SEARCH DEVICE, METHOD, AND PROGRAM**

(30) Priority: 21.09.2022 JP 2022149874
(71) Applicant: Resonac Corporation, Tokyo 105-7325 (JP)
(72) Inventor: NISHINO, Shogo, Tokyo 105-8518 (JP); KAWAHARA, Yu, Tokyo 105-8518 (JP); TAKEMOTO, Shimpei, Tokyo 105-8518 (JP); TAKASHI, Hiroko, Tokyo 105-8518 (JP); OKUNO, Yoshishige, Tokyo 105-8518 (JP)
(74) Representative: Strehl & Partner mbB
(86) International application number: PCT/JP2023/031354
(87) International publication number: WO 2024/062861

(57) **Abstract**

An information search device, method, and program for acquiring a link to unstructured data associated with structured data are provided. The information search device includes a graph drawing unit configured to draw as structured data, a graph extraction range acquisition unit configured to extract one or more data points in the drawn graph, and an in-range graph extraction data acquisition unit configured to acquire a table including structured data including the extracted data point and a link to unstructured data.

## Description

### TECHNICAL FIELD

The present disclosure relates to an information search device, a method, and a program.

### BACKGROUND

There is various digital processing of data. For example, Patent Document 1 discloses a data extraction processing device that includes a graph drawing unit configured to draw a two-dimensional graph based on tabular data, and a data extraction unit configured to read an extraction condition for sample extraction from the two-dimensional graph and extract a required sample from the tabular data, and visually extracts the sample. Patent Document 2 discloses a research-and-development property management system that includes means for associating experiment notebook data with experiment data and managing them in a unified manner, and means for searching for and browsing the experiment notebook data and the experiment data.

### Related Art Document

### Patent Documents

[Patent Document 1] Japanese Patent Application Laid-Open No. H4-37952
[Patent Document 2] Japanese Patent Application Laid-Open No. 2008-083806

### SUMMARY OF THE INVENTION

### Problem to be Solved by the Invention

In Patent Document 1, structured data including numerical data, such as experimental data, a reagent name, and the like is utilized, but unstructured data including a graph representation, experimental condition information, and the like is not utilized. The system disclosed in Patent Document 2 includes means for storing experimental data in an experimental data database with link information to experiment notebook data being added thereto, and thus experimental data of another person from previously conducted experiments can be easily referred to. However, there is no mechanism for a user to analyze experimental data and identify data to be utilized.

The present disclosure relates to an information search device, method, and program for acquiring a link to unstructured data associated with structured data.

### Means for Solving Problem

The present disclosure includes the following configurations.
[1] An information search device including:
   a graph drawing unit configured to draw structured data as a graph;
   a graph extraction range acquisition unit configured to extract one or more data points in the drawn graph; and
   an in-range graph extraction data acquisition unit configured to acquire a table including structured data including the extracted data points and a link to unstructured data.
[2] The information search device as described in [1], further including a search expression acquisition unit configured to acquire a search expression for identifying the structured data to be drawn as the graph by the graph drawing unit.
[3]The information search device as described in [1] or [2], further including:
   a total data storage unit configured to store unstructured data;
   a data extraction unit configured to extract all or a part of the unstructured data from the total data storage unit;
   a data conversion unit configured to convert the extracted unstructured data into structured data; and
   a structured data storage unit configured to store the converted structured data,
   wherein the graph drawing unit draws the structured data stored in the structured data storage unit as a graph.
[4] The information search device as described in [3], wherein an electronic experiment notebook is used as the total data storage unit.
[5] The information search device as described in [3], wherein a data lake is used as the total data storage unit.
[6] An information search method of a computer acquiring a link to unstructured data, the information search method including:
   a graph drawing step of drawing structured data as a graph;
   a graph extraction range acquisition step of extracting one or more data points in the drawn graph; and
   an in-range graph extraction data acquisition step of acquiring a table including structured data including the extracted data points and a link to unstructured data.
[7] A program for causing a computer configured to acquire a link to unstructured data to perform:
   a graph drawing procedure of drawing structured data as a graph;
   a graph extraction range acquisition procedure of extracting one or more data points in the drawn graph; and
   an in-range graph extraction data acquisition step of acquiring a table including structured data including the extracted data points and a link to unstructured data.

### Effect of the Invention

A user can analyze experimental data, identify data to be utilized, and arrive at unstructured data of the data to be utilized.

### BRIEF DESCRIPTION OF THE DRAWINGS

[FIG. 1] FIG. 1 is a configuration diagram of an example of an information processing system according to the present embodiment.
[FIG. 2] FIG. 2 is a hardware configuration diagram of an example of a computer according to the present embodiment.
[FIG. 3] FIG. 3 is a functional configuration diagram of an example of the information processing system according to the present embodiment.
[FIG. 4] FIG. 4 is a flowchart illustrating an example of a processing procedure of an information search device according to the present embodiment.
[FIG. 5] FIG. 5 is a flowchart illustrating an example of the processing procedure of the information search device according to the present embodiment.
[FIG. 6] FIG. 6 is an image diagram of an example of a search expression input screen.
[FIG. 7] FIG. 7 is an image diagram of an example of the search expression input screen.
[FIG. 8] FIG. 8 is an image diagram of an example of a graph to be drawn.
[FIG. 9] FIG. 9 is an image diagram of an example of a display item input screen for a graph.
[FIG. 10] FIG. 10 is an image diagram of an example of the graph to be drawn.
[FIG. 11] FIG. 11 is an image diagram of an example of a graph drawing screen in which a graph extraction range is designated.
[FIG. 12] FIG. 12 is an image diagram of an example of a table of structured data including a link to unstructured data.
[FIG. 13] FIG. 13 is an image diagram of an example of the table of the structured data including the link to the unstructured data.
[FIG. 14] FIG. 14 is an image diagram of an example of an embodiment using a data lake as a total data storage unit.
[FIG. 15] FIG. 15 is an image diagram of an example of an embodiment using an electronic experiment notebook as the total data storage unit.

### DESCRIPTION OF EMBODIMENTS

Next, embodiments of the present invention will be described in detail. Here, the present invention is not limited to the following embodiments.

### [First Embodiment]

### <System Configuration>

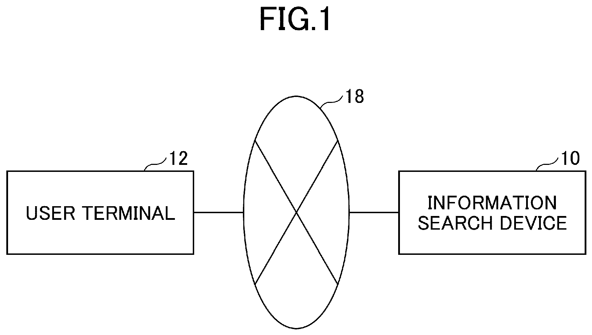

FIG. 1 is a configuration diagram of an example of an information processing system according to the present embodiment. The information processing system in FIG. 1 includes an information search device 10 and a user terminal 12. The information search device 10 and the user terminal 12 are connected to each other via a communication network 18, such as a local area network (LAN) or the Internet, so that data communication can be performed.

The user terminal 12 is an information processing terminal operated by a user, such as a PC, a tablet terminal, or a smartphone. The user terminal 12 displays a screen for receiving an input of information from the user on a display device, and receives the input of information from the user. Additionally, the user terminal 12 transmits the received information input by the user to the information search device 10, and causes the information search device 10 to perform a process of acquiring a link to unstructured data. The user terminal 12 receives information on a result of the process performed by the information search device 10, and displays the information on the display device to allow the user to confirm the information.

The information search device 10 is an information processing device such as a PC configured to support information searches. The information search device 10 performs a process of drawing structured data as a graph, a process of extracting one or multiple data points from the drawn graph, and a process of acquiring a table including structured data including the extracted data point and a link to unstructured data.

The information search device 10 performs a process related to graph drawing for drawing structured data as a graph. The information search device 10 transmits information on a result of the process to the user terminal 12, and causes the user terminal 12 to display the graph to allow the user to confirm the graph. When the user designates a graph extraction range at the user terminal 12, the user terminal 12 transmits information on the graph extraction range to the information search device 10. Next, the information search device 10 performs a process of extracting a data point and a process of acquiring a table including structured data including the extracted data point and a link to unstructured data. The information processing system in FIG. 1 can be realized by, for example, the information search device 10 having a web server function and the user terminal 12 configured to execute a web application by a web browser function.

Here, the information processing system in FIG. 1 is an example, and it is needless to say that various system configuration examples are available according to the application and purpose. For example, the information search device 10 may be implemented by multiple computers or may be implemented as a service of cloud computing. Additionally, the information processing system in FIG. 1 may be implemented by a stand-alone computer.

### <Hardware Configuration>

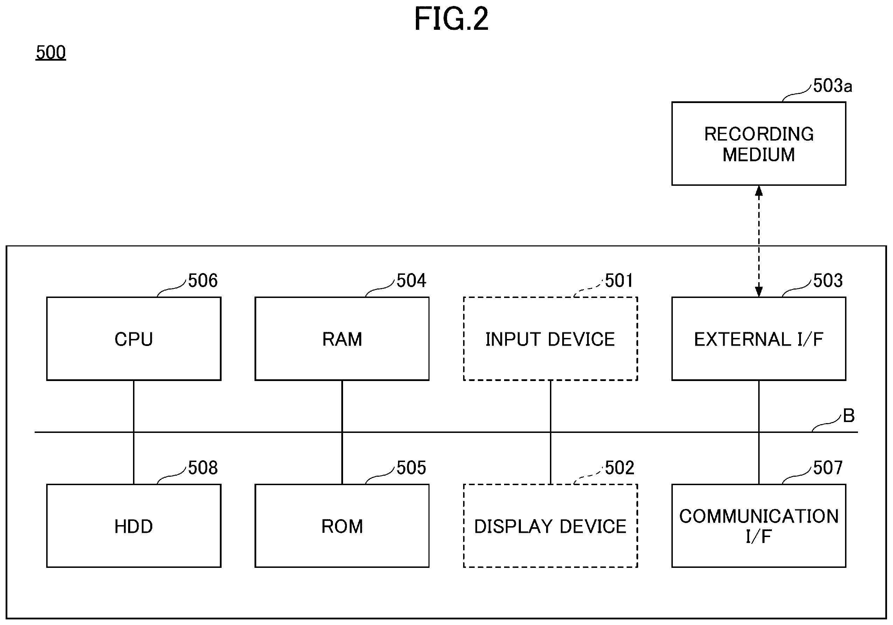

The information search device 10 and the user terminal 12 in FIG. 1 are implemented by a computer 500 having a hardware configuration illustrated in FIG. 2, for example.

FIG. 2 is a hardware configuration diagram of an example of a computer according to the present embodiment. The computer 500 in FIG. 2 includes an input device 501, a display device 502, an external I/F 503, a RAM 504, a ROM 505, a CPU 506, a communication I/F 507, an HDD 508, and the like, which are connected to each other via a bus B. Here, the input device 501 and the display device 502 may be connected to each other for use.

The input device 501 is a touch panel, an operation key, an operation button, a keyboard, a mouse, or the like used by the user to input various signals. The display device 502 is configured by a display, such as a liquid crystal display or an organic EL display configured to display a screen, a speaker configured to output sound data, such as voice or sound, and the like. The communication I/F 507 is an interface for the computer 500 to perform data communication.

Additionally, the HDD 508 is an example of a non-volatile storage device configured to store programs and data. The stored programs and data include an OS, which is basic software for controlling the entire computer 500, applications for providing various functions on the OS, and the like. Here, the computer 500 may use a drive device (for example, a solid state drive (SSD)) using a flash memory as a storage media, instead of the HDD 508.

The external I/F 503 is an interface with an external device. The external device includes a recording medium 503a and the like. With this, the computer 500 can read and/or write data from/to the recording medium 503a via the external I/F 503. The recording medium 503a includes a flexible disk, a CD, a DVD, an SD memory card, a USB memory, and the like.

The ROM 505 is an example of a nonvolatile memory (a storage device) configured to retain programs and data even when the power is turned off. The ROM 505 stores programs and data, such as BIOS, OS settings, and network settings that are executed when the computer 500 is started. The RAM 504 is an example of a volatile memory (a storage device) configured to temporarily store programs and data.

The CPU 506 is an arithmetic device configured to read the programs and data from the storage device, such as the ROM 505 or the HDD 508, onto the RAM 504 and execute processing to realize control and functions of the entire computer 500. The computer 500 according to the present embodiment can realize various functions of the information search device 10 and the user terminal 12 as described later by executing the programs.

An information search program of the present embodiment is stored in the storage device included in the computer, for example. Here, the information search program may be configured such that a part or all of the information search program is transmitted via a transmission medium, such as a communication line, is received by a communication module or the like included in the computer, and is recorded (including installation). Additionally, the information search program may be configured to be recorded (including installation) in the computer from a state where a part or all of the information search program is stored in a portable recording medium, such as a CD, a DVD, or a USB memory.

### <Functional Configuration>

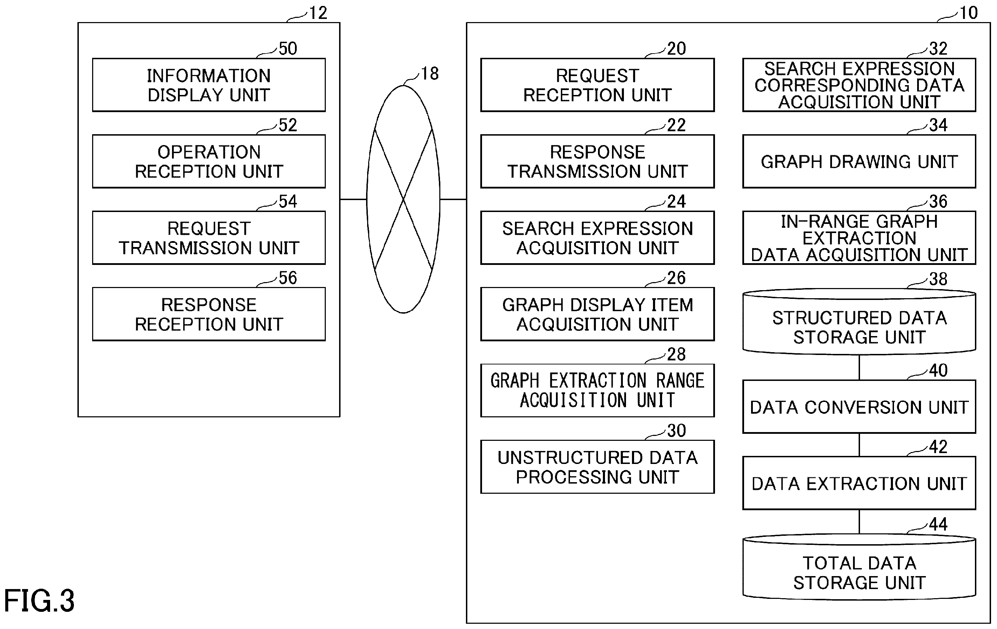

A functional configuration of the information processing system according to the present embodiment will be described. FIG. 3 is a functional configuration diagram of an example of the information processing system according to the present embodiment. Here, in the configuration diagram of FIG. 3, parts unnecessary for the description of the present embodiment are omitted as appropriate.

The information search device 10 of the information processing system illustrated in FIG. 3 includes a request reception unit 20, a response transmission unit 22, a search expression acquisition unit 24, a graph display item acquisition unit 26, a graph extraction range acquisition unit 28, an unstructured data processing unit 30, a search expression corresponding data acquisition unit 32, a graph drawing unit 34, an in-range graph extraction data acquisition unit 36, a structured data storage unit 38, a data conversion unit 40, a data extraction unit 42, and a total data storage unit 44. Additionally, the user terminal 12 includes an information display unit 50, an operation reception unit 52, a request transmission unit 54, and a response reception unit 56.

The structured data storage unit 38 stores structured data. The structured data is structured data in which data is arranged in rows and columns, and preferably, is data having a unique ID and having, for example, information of items of rows and columns as metadata. In the present embodiment, the structured data includes numerical data, such as experimental data, reagent names, and the like. The structured data includes a link to unstructured data before the conversion into the structured data.

The total data storage unit 44 stores unstructured data. The data extraction unit 42 extracts unstructured data that is a structured data candidate from the unstructured data stored in the total data storage unit 44. The data conversion unit 40 converts the structured data candidate extracted by the data extraction unit 42 into structured data, and stores the structured data in the structured data storage unit 38. The unstructured data is, for example, a graph representation, experiment condition information, and the like, and when an electronic experiment notebook described later is used as the total data storage unit 44, the unstructured data is all data stored in the electronic experiment notebook.

A data lake may be used as the total data storage unit 44. The data lake is a repository configured to store data collected from various sources in unified management, and the repository indicates a storage or a storehouse of data. For the data lake, a commercial data lake, such as Snowflake (registered trademark), Databricks (registered trademark), and the like may be used. Alternatively, a data lake such as HADOOP (registered trademark) developed and published by the open source software community Apache Software Foundation may be used.

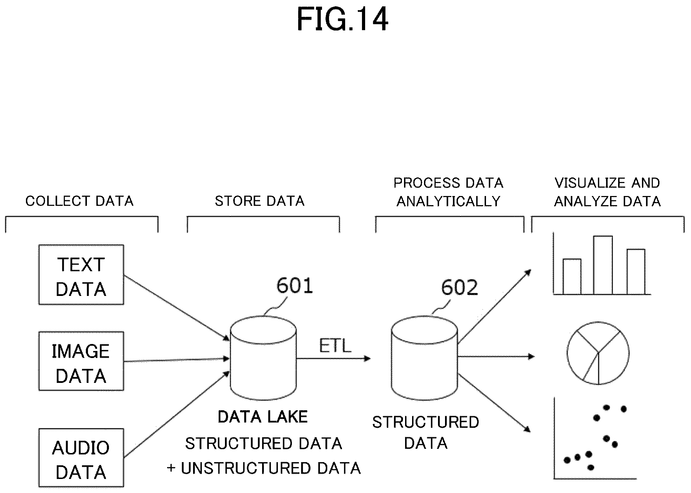

FIG. 14 illustrates an example of data utilization using a data lake. In FIG. 14, text data, image data, and audio data are accumulated in a data lake 601, and ETL is performed on the accumulated data to store the data in a database 602 as the structured data. ETL indicates extracting necessary data from data stored in a database or the like, transforming the data according to the purpose, and loading the data into a system that requires the data. Examples of ETL tools include Pipeline Pilot provided by Dassault Systèmes and Informatica (registered trademark) provided by Informatica Japan. The data stored as the structured data is visualized and analyzed. When the data lake 601 in FIG. 14 is used as the total data storage unit 44, the structured data storage unit 38 corresponds to the database 602 of FIG. 14.

An electronic experiment notebook can be used as the total data storage unit 44. The electronic experiment notebook is a system configured to record and utilize various information related to an experiment as digital data. The electronic experiment notebook may be a BIOVIA Notebook, which is a commercial electronic experiment notebook provided by BIOVIA.

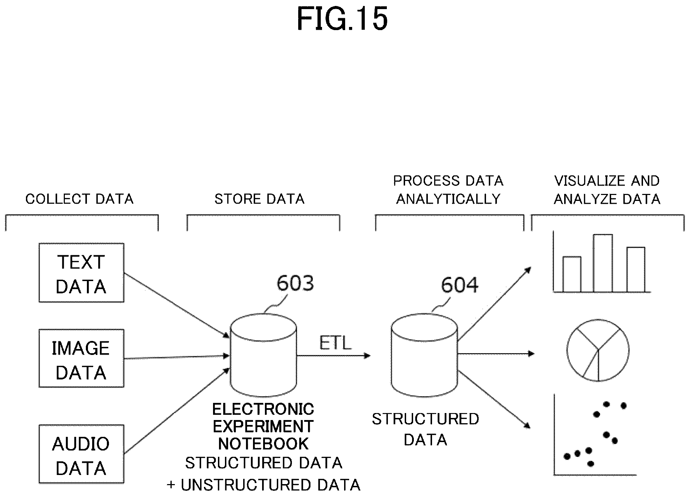

FIG. 15 illustrates an example of data utilization using the electronic experiment notebook. In FIG. 15, text data, image data, and audio data are accumulated in an electronic experiment notebook 603, and ETL is performed on the accumulated data to store data in a database 604 as the structured data. The data stored as the structured data is visualized and analyzed. In a case where the electronic experiment notebook 603 in FIG. 15 is used as the total data storage unit 44, the structured data storage unit 38 corresponds to the database 604 in FIG. 15.

The information display unit 50 of the user terminal 12 displays, on the display device 502, a screen for receiving an input of information from the user and information such as a result of the process performed by the information search device 10. The operation reception unit 52 receives a user operation, such as the input of the information. The request transmission unit 54 transmits, to the information search device 10, a request for a process corresponding to the input of the information from the user. Additionally, the response reception unit 56 receives, from the information search device 10, a response to the request for the process transmitted by the request transmission unit 54.

The request reception unit 20 receives the request for the process from the user terminal 12. The response transmission unit 22 responds with a processing result corresponding to the request of the process.

The search expression acquisition unit 24 acquires a search expression for identifying structured data to be drawn as a graph by the graph drawing unit 34, which will be described later, based on a search condition designated by the user. The search expression acquisition unit 24 transmits the acquired search expression to the search expression corresponding data acquisition unit 32.

The search expression corresponding data acquisition unit 32 acquires, from the structured data storage unit 38, structured data corresponding to the search expression acquired by the search expression acquisition unit 24. The search expression corresponding data acquisition unit 32 transmits the acquired structured data to the information display unit 50.

The information display unit 50 displays the acquired structured data in a table format on the display device 502.

The graph display item acquisition unit 26 acquires graph display items of a graph drawn by the graph drawing unit 34, which will be described later, based on information designated by the user. The graph display items are, for example, a type of a property to be displayed on the horizontal axis (the X axis) of the graph, a type of a property to be displayed on the vertical axis (the Y axis) of the graph, and a type of a property to be displayed on the Z axis of the graph displayed by a color bar. The graph display item acquisition unit 26 transmits the acquired graph display items to the graph drawing unit 34.

The graph drawing unit 34 draws the structured data acquired by the search expression corresponding data acquisition unit 32 as a graph based on the graph display items acquired by the graph display item acquisition unit 26. When the user does not designate the graph display item, the graph is drawn based on the default graph display item. The graph drawing unit 34 transmits the drawn graph to the information display unit 50.

The information display unit 50 displays the acquired graph on the display device 502.

The graph extraction range acquisition unit 28 acquires a graph extraction range designated by the user. The in-range graph extraction data acquisition unit 36 extracts, from the structured data storage unit 38, structured data corresponding to one or more data points included in the graph extraction range acquired by the graph extraction range acquisition unit 28. Next, the in-range graph extraction data acquisition unit 36 creates and acquires a table including the structured data including the extracted data point and a link to the unstructured data. The acquired structured data is transmitted to the information display unit 50.

The information display unit 50 displays the acquired table on the display device 502. The displayed table includes a hyperlink associated with the unstructured data.

The unstructured data processing unit 30 acquires a link selected by the user. The unstructured data processing unit 30 acquires, from the total data storage unit 44, unstructured data associated with the selected link. The unstructured data processing unit 30 transmits the acquired unstructured data to the information display unit 50.

The information display unit 50 displays the acquired unstructured data on the display device 502.

In such a way, the user can access the unstructured data associated with the structured data after identifying the structured data to be analyzed, and can utilize the unstructured data, such as the graph representation and the experiment condition information, included in the unstructured data, for material development and the like.

Here, the configuration diagram of FIG. 3 is an example. The configuration of the information processing system according to the present embodiment can be realized by various configurations.

### <Information Search Method>

A procedure of an information search method using the information search device of the present invention will be described in detail.

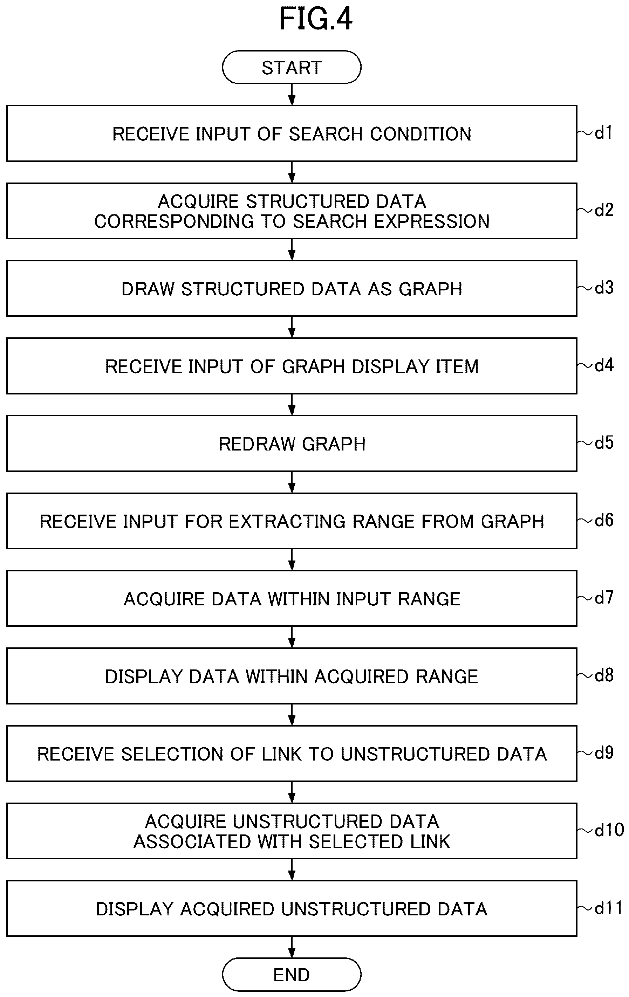

FIG. 4 is a flowchart illustrating an example of the information search method of the present embodiment.

In step d1, the user terminal 12 receives an input of the search condition. The search expression acquisition unit 24 of the information search device 10 acquires the search expression.

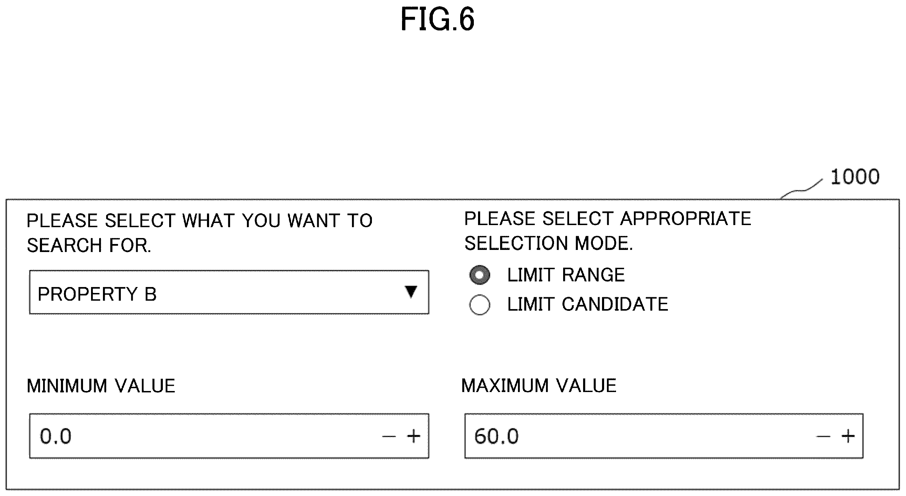

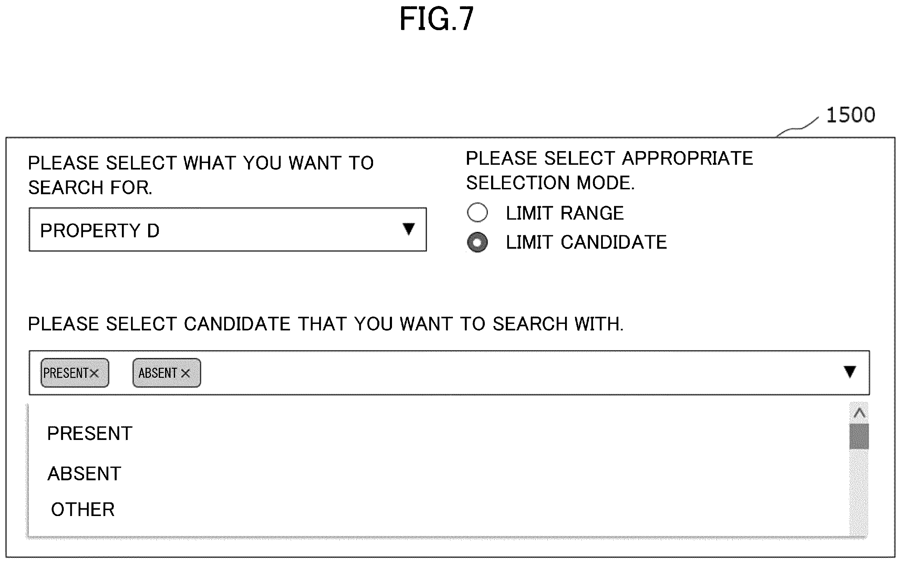

FIGS. 6 and 7 are image diagrams of examples of a search expression input screen.

For example, the user inputs the search expression through the search expression input screen of FIG. 6 displayed on the user terminal 12. In a search expression input screen 1000 of FIG. 6, a mode for limiting a range is selected in a selection mode at the upper right, and the user is caused to input a property value included in the structured data to be analyzed and the maximum and minimum values thereof. In FIG. 6, "physical property B" is selected from a pull-down menu, and 0.0 is input as the minimum value and 60.0 is input as the maximum value.

In a search expression input screen 1500 of FIG. 7, a mode for limiting candidates is selected in the selection mode at the upper right, and the user is caused to input the evaluation type of the property value. In FIG. 7, "physical property D" is selected from a pull-down menu, and "present" and "absent" are selected from "present", "absent", "other", and the like as the evaluation type.

In step d2, the search expression corresponding data acquisition unit 32 of the information search device 10 acquires structured information corresponding to the search expression acquired by the search expression acquisition unit 24 in step d1 from the structured data storage unit 38. The search expression corresponding data acquisition unit 32 transmits the acquired structured data to the information display unit 50, and the information display unit 50 displays the acquired structured data in a table format on the display device 502.

In step d3, the graph drawing unit 34 of the information search device 10 draws the structured data acquired by the search expression corresponding data acquisition unit 32 in step d2 as a graph based on the graph display items designated by default. The graph drawing unit 34 transmits the drawn graph to the information display unit 50.

The information display unit 50 of the user terminal 12 displays the drawn graph.

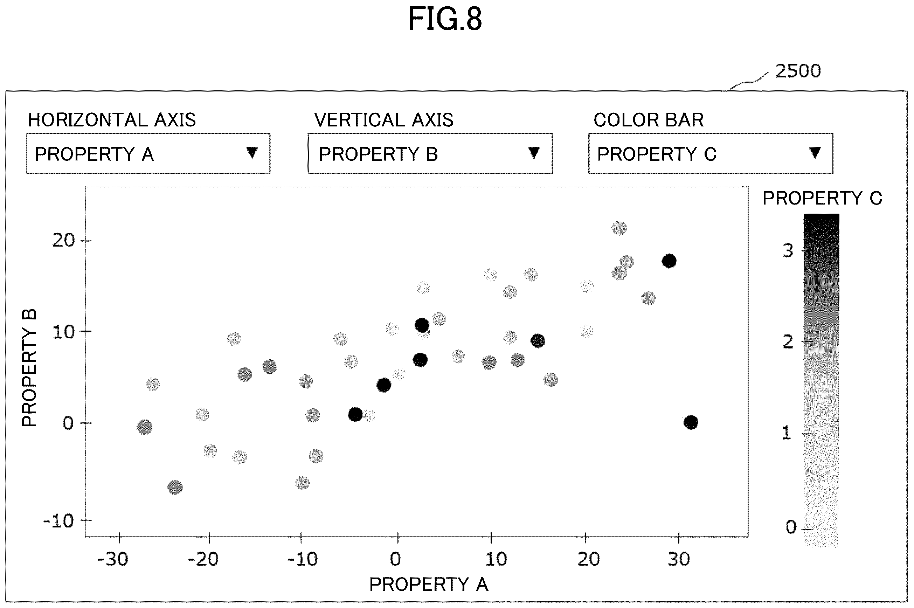

FIG. 8 is an image diagram of an example of the graph to be drawn. FIG. 8 is an example of a graph drawn using the horizontal axis as "property A", the vertical axis as "property B", and the color bar as "property C", based on the default designation.

In step d4, the user terminal 12 receives an input of the graph display item. The graph display item acquisition unit 26 of the information search device 10 acquires the graph display item.

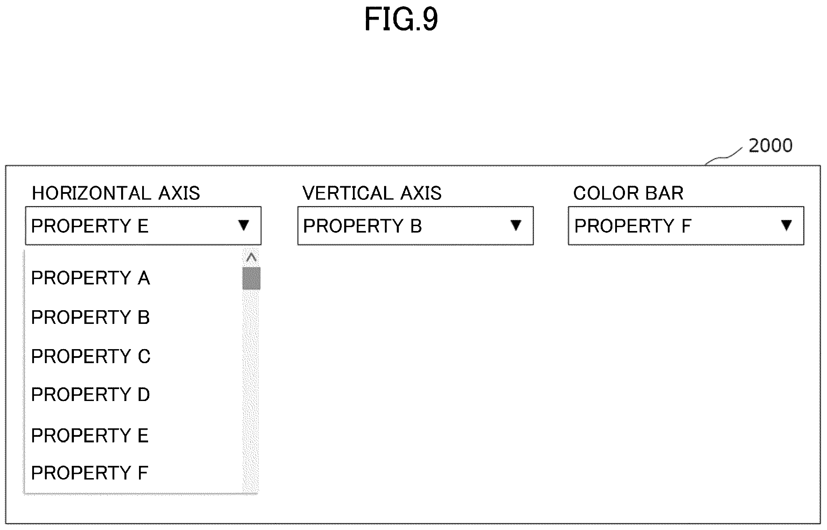

FIG. 9 is an image diagram of an example of a graph display item input screen. A graph display item input screen 2000 of FIG. 9 is an example of a screen for causing the user to input display items of the horizontal axis, the vertical axis, and the color bar when drawing a graph. In the graph display item input screen 2000 of FIG. 9, a display item of the horizontal axis is selected from a pull-down menu below a character string of "horizontal axis", a display item of the vertical axis is selected from a pull-down menu below a character string of "vertical axis", and a display item of the color bar is selected from a pull-down menu below a character string of "color bar".

In step d5, the graph drawing unit 34 of the information search device 10 redraws the structured data acquired in step d4 as a graph based on the graph display item acquired by the graph display item acquisition unit 26 in step d2. The information display unit 50 of the user terminal 12 displays the redrawn graph. If no display item is input in step d4, the graph is not redrawn.

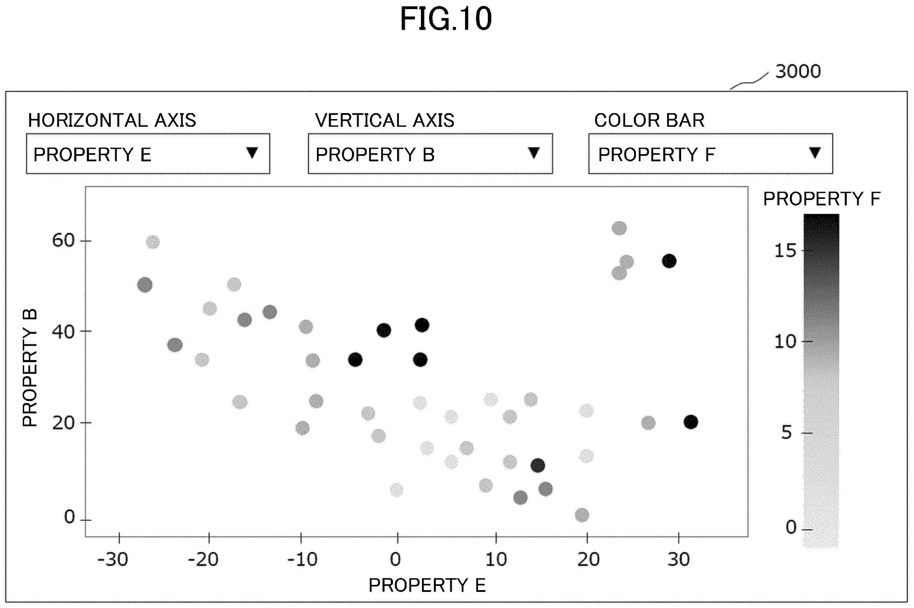

FIG. 10 is an example of a graph to be redrawn based on the graph display item acquired in step d5. The "property E" is selected as the horizontal axis, the "property B" is selected as the vertical axis, and the "property F" is selected as the color bar.

The process may return to step d3 at the user's discretion based on the graphs displayed in steps d1 and d5.

In step d6, the user terminal 12 receives an input of the graph extraction range. The graph extraction range acquisition unit 28 of the information search device 10 acquires the graph extraction range.

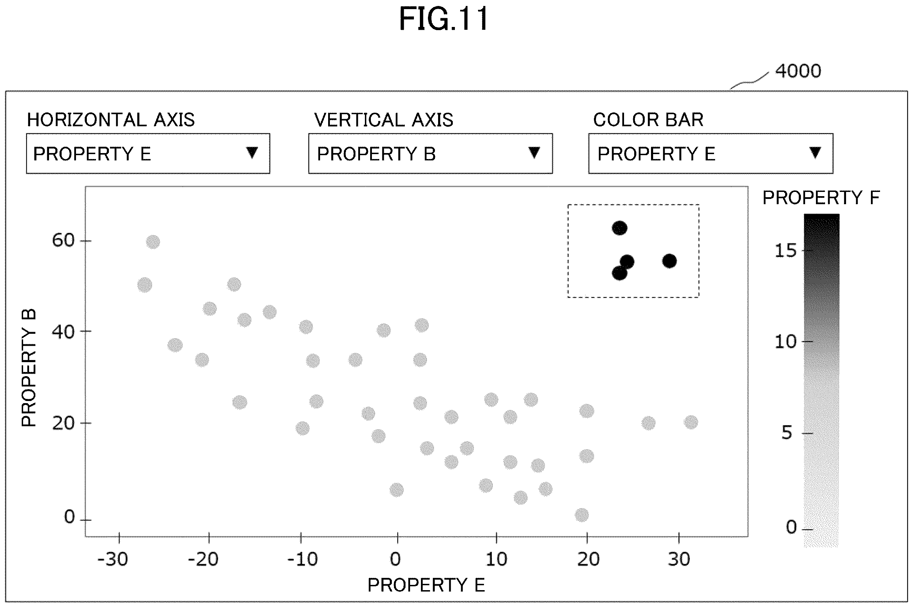

FIG. 11 is an image diagram of an example of a graph drawing screen in which the graph extraction range is designated. In a graph drawing screen 4000 of FIG. 11, four data points surrounded by a dotted line rectangle at the upper right are designated as the graph extraction range. The four data points surrounded by the dotted line rectangle are extracted as the property B and the property E, but structured data including multidimensional information up to the property F or more is designated as the extraction range.

In step d7, the in-range graph extraction data acquisition unit 36 of the information search device 10 acquires, from the structured data storage unit 38, the structured data included in the graph extraction range acquired by the graph extraction range acquisition unit 28 in step d6. The structured data included in the graph extraction range may be acquired from the structured data acquired in step d2. The in-range graph extraction data acquisition unit 36 creates and acquires a table including structured data including the extracted data points and a link to unstructured data. The in-range graph extraction data acquisition unit 36 transmits the acquired table to the information display unit 50.

In step d8, the information display unit 50 of the user terminal 12 displays the acquired table.

In step d9, selection, by the user, of the hyperlink included in the displayed table is received. The unstructured data processing unit 30 of the information search device 10 acquires the link selected by the user.

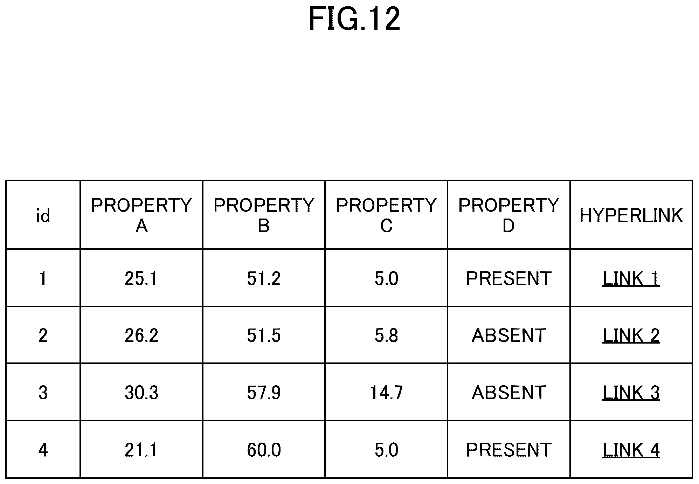

FIG. 12 is an image diagram of an example of the table of the structured data including the link to the unstructured data. FIG. 12 is an example of the table including the link to the unstructured data displayed in step d8. In FIG. 12, hyperlinks to unstructured data corresponding to the respective data are embedded in the "hyperlink" column, and the user can select the link to the unstructured data by clicking the hyperlink in the table.

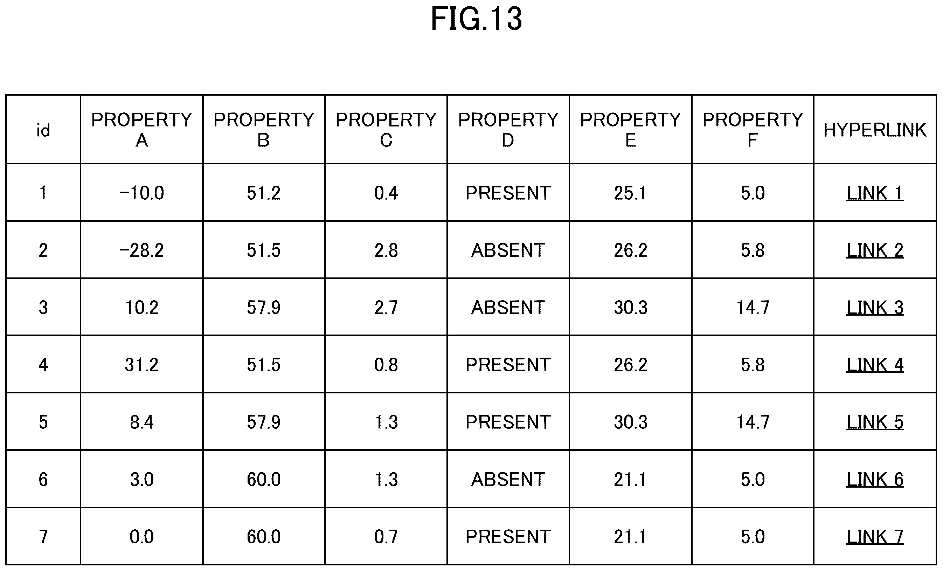

FIG. 13 is an image diagram of an example of the table of the structured data including the link to the unstructured data. FIG. 13 is an example of the table including the link to the unstructured data displayed in step d8. In FIG. 13, four points are designated as the graph extraction range based on the property B and the property E, but it is found that seven pieces of structured data of materials 1 to 7 having different property values in other properties are acquired.

In step d10, the unstructured data processing unit 30 of the information search device 10 acquires, from the total data storage unit 44, the unstructured data associated through the link selected in step d9. The unstructured data processing unit 30 transmits the acquired unstructured data to the information display unit 50.

In step d11, the information display unit 50 of the user terminal 12 displays the unstructured data acquired by the unstructured data processing unit 30 in step d10. In such a way, the user can utilize the graph representation and the experiment information that are not included in the structured data.

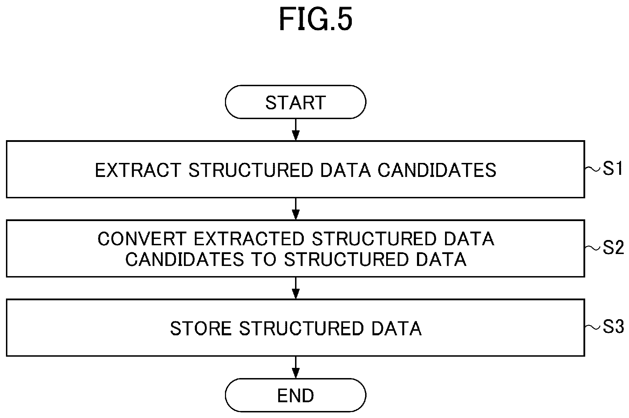

FIG. 5 is an example of a flowchart for explaining a procedure of creating structured data to be searched for by the information search device of the present invention.

In step S1, the data extraction unit 42 of the information search device 10 extracts unstructured data that is a structured data candidate from the unstructured data stored in the total data storage unit 44. A method of determining the structured data candidate is not particularly limited. In the determination of the structured data candidate, target data may be determined by using a title characterized by a symbol such as a bracket, a brace, or the like, or target data may be determined by using a specific file format configured in a file format such as Excel (registered trademark).

In step S2, the data conversion unit 40 of the information search device 10 converts, into the structured data, the structured data candidate extracted by the data extraction unit 42 in step S1. The method of converting the data into the structured data is not particularly limited.

In step S3, the structured data created in step S2 is stored in the structured data storage unit 38 by the data conversion unit 40.

The procedure of the structured data creation from step S1 to step S3 may be performed sequentially. Additionally, the procedure of the structured data creation may be triggered by a user operation, such as pressing a "structured data creation" button displayed on an interface screen displayed on the user terminal 12.

As described above, according to the information processing system of the present embodiment, an information search device, method, and program that enable unstructured data of target data utilized by a user to be reached can be provided.

Although the present embodiment has been described above, it will be understood that various changes in forms and details may be made without departing from the spirit and scope of the appended claims.

This application claims priority to Japanese Patent Application No. 2022-149874 filed on September 21, 2022 in the Japan Patent Office, the entire contents of which are incorporated herein by reference.

### Description of reference symbols

10 information search device
12 user terminal
18 communication network
24 search expression acquisition unit
26 graph display item acquisition unit
28 graph extraction range acquisition unit
30 unstructured data processing unit
32 search expression corresponding data acquisition unit
34 graph drawing unit
36 in-range graph extraction data acquisition unit
38 structured data storage unit
40 data conversion unit
42 data extraction unit
44 total data storage unit
502 display device

## Claims

1. An information search device comprising:
a graph drawing unit configured to draw structured data as a graph;
a graph extraction range acquisition unit configured to extract one or more data points in the drawn graph; and
an in-range graph extraction data acquisition unit configured to acquire a table including structured data including the extracted data points and a link to unstructured data.

2. The information search device as claimed in claim 1, further comprising a search expression acquisition unit configured to acquire a search expression for identifying the structured data to be drawn as the graph by the graph drawing unit.

3. The information search device as claimed in claim 1 or 2, further comprising:
a total data storage unit configured to store unstructured data;
a data extraction unit configured to extract all or a part of the unstructured data from the total data storage unit;
a data conversion unit configured to convert the extracted unstructured data into structured data; and
a structured data storage unit configured to store the converted structured data,
wherein the graph drawing unit draws the structured data stored in the structured data storage unit as a graph.

4. The information search device as claimed in claim 3, wherein an electronic experiment notebook is used as the total data storage unit.

5. The information search device as claimed in claim 3, wherein a data lake is used as the total data storage unit.

6. An information search method of a computer acquiring a link to unstructured data, the information search method comprising:
a graph drawing step of drawing structured data as a graph;
a graph extraction range acquisition step of extracting one or more data points in the drawn graph; and
an in-range graph extraction data acquisition step of acquiring a table including structured data including the extracted data points and a link to unstructured data.

7. A program for causing a computer configured to acquire a link to unstructured data to perform:
a graph drawing procedure of drawing structured data as a graph;
a graph extraction range acquisition procedure of extracting one or more data points in the drawn graph; and
an in-range graph extraction data acquisition step of acquiring a table including structured data including the extracted data points and a link to unstructured data.
